Europäisches Patentamt

European Patent Office

Office européen des brevets

(11) Publication number: **0 013 448**
A2

# EUROPEAN PATENT APPLICATION

(21) Application number: 79200762.7

(22) Date of filing: 13.12.79

(51) Int. Cl.³: **B 23 P 11/00**

(30) Priority: 04.01.79 GB 7900304

(43) Date of publication of application:
23.07.80 Bulletin 80/15

(84) Designated Contracting States:
BE CH DE FR GB IT SE

(71) Applicant: **Task Power and Control Limited**
**Sustanum Works Titchfield**
**Fareham, Hampshire PO14 4AA(GB)**

(72) Inventor: **Hutchins, Reginald Albert**
**2 Reeves Way Lowford Bursledon**
**Southampton, Hampshire(GB)**

(74) Representative: **Russell, James, Dr. et al,**
**Procurement Executive Ministry of Defence Patents 1A4**
**Room 1932 (19 Floor)**
**Empress State Building London SW6 1TR(GB)**

(54) Improvements in or relating to cylindrical bodies having fixed collars.

(57) A cold-pressing process is used for fitting a cylindrical body with a fixed collar resistant to relative rotation at high shear stresses.

The invention is specifically applied to a shell and a driving band (9), the shell being provided with a keyed portion (2) having a plurality of axially parallel keys (7) each machined at one end face (6) to provide a cutting edge (8). In assembly the collar is aligned with the keyed portion and axially pressed against the cutting edges so as to broach keyways in the collar which engage fully with the keys.

Fig.1.

EP 0 013 448 A2

- 1 -

Improvements in or relating to cylindrical bodies having fixed collars

The present invention relates to cylindrical bodies having fixed collars, i.e. collars inhibited from relative rotation, and in particular but not exclusively, to a shot or shell having a fixed driving band.

Loose collars can be secured to cylindrical bodies intended for axial rotation about their own axis, eg shafts, by a variety of known means to prevent relative rotation between the two components. Such means include the use of set screws, inter-engagable keys and keyways or, if uni-directional rotation only is intended, the collar can be threaded on to the body in a direction which ensures tightening in use. Plastics material collars can be moulded on to splined cylindrical bodies, but such means of attachment is not suitable if high shear stresses are to be encountered in subsequent use.

. Shot and shell and their fixed driving bands are particularly subject to extreme shear stresses and robust methods of fixing are required. Copper driving bands are usually held by variously shaped, rotation-inhibiting protrusions on the shell periphery, the band being forced over these protrusions whilst in a heated state. Nylon driving bands are normally attached, whilst in a heated condition, by the threading technique mentioned above. Such technique is not entirely satisfactory in this application as slip can sometimes occur in subsequent use as a result of water absorption and distortion of the nylon following upon the heat treatment.

The present invention seeks to provide a secure means of attachment which does not impair the stability of the collar material.

Accordingly, a cylindrical body intended for assembly with a collar of material softer than that of the body includes a keyed portion having a plurality of axially parallel keys each of which is provided with a cutting edge at one common axi-directional extremity thereof.

Assembly of the collar with the keyed portion is achieved by a process which includes pressing the collar axially against the cutting edges, thereby causing axial keyways to be broached in the inner surface of the collar, which keyways intimately engage with the keys to prevent relative rotation in subsequent use.

The body is preferably metal and the collar may be of a softer metal or may be a plastics material.

The keys are preferably integral with the body and may be splines of rectangular cross section or any other cross section capable of providing adequate rotational lock between the body and the collar during subsequent use. The splines may be manufactured by a gear cutting process or alternatively splines of triangular section, ie serrations, may be conveniently and simply provided by a process of knurling.

To ensure intimate coupling between the collar and the keys and to prevent distortion of the collar during assembly, the collar is preferably a light interference fit with the root cylinder of the keyed portion and is peripherally confined throughout the broaching process in a relatively non-expandable support sleeve.

The body and the collar may comprise any artefact for which it is important to prevent relative rotation of the two parts, and in particular one which is subject to high shear stresses such as a shot

- 3 -

0013448

or a shell and a driving band.

An embodiment of the invention will now be described by way of example only with reference to the accompanying drawings of which

Figure 1 is a part axially sectioned shell base with a fully axially sectioned driving band, after assembly,

Figure 2 is a transverse section of the same shell base before assembly, taken on the line II-II of Figure 1,

Figure 3 is a transverse section of the same driving band prior to assembly,

Figure 4 is a transverse section of the same driving band and shell base after assembly, and

Figure 5 is an axial section of the tools required for assembly.

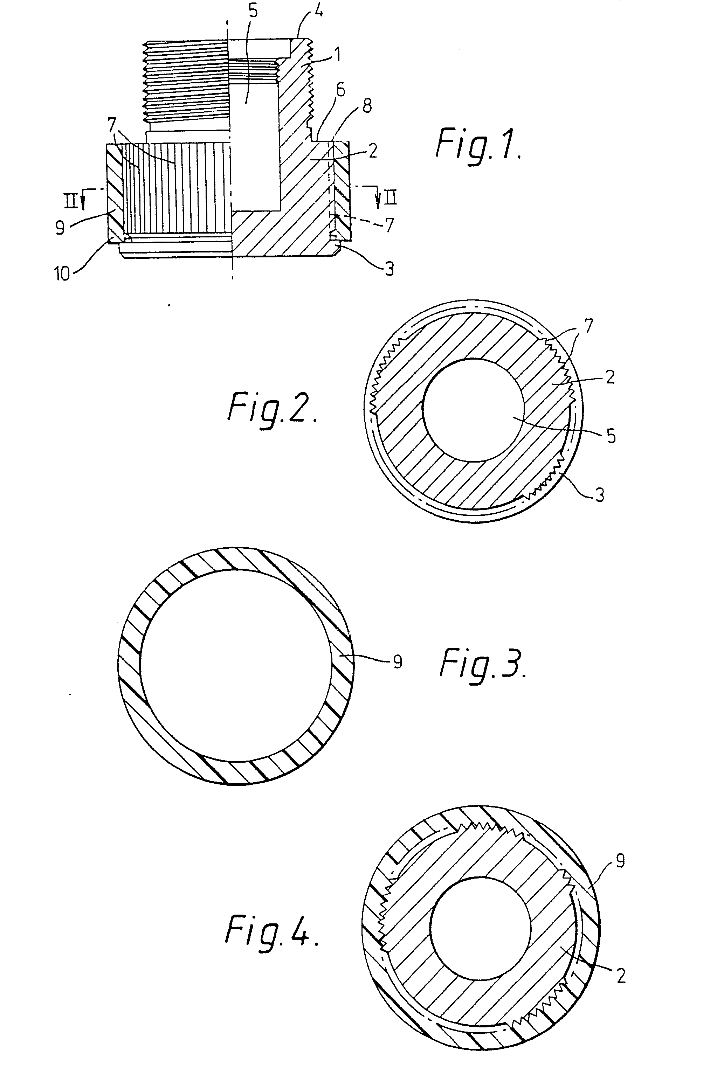

The shell base illustrated in Figures 1, 2 and 4 is made of steel and has an externally threaded portion 1 for attachment to a shell body (not shown), a keyed, i.e. serrated, portion 2 of larger diameter than the portion 1, and a flange portion 3 of larger diameter than the portion 2. The threaded portion 1 has an end face 4 and an axi-symmetric cylindrical recess 5.

The serrated portion 2 has an end face 6 and has equally spaced axial serrations 7 of 90° Vee form continuously disposed around the whole of its periphery. The serrations 7 are manufactured by a knurling process and the end face 6 is machined square to the serrations after knurling so as to achieve a sharp cutting edge 8 at the periphery of the end face 6, i.e. at the upper extremity of the serrations 7 (as drawn).

A nylon driving band 9 having the form of a smooth-bored cylindrical sleeve (see Figure 3) is prepared for assembly, the band being of internal diameter which is a light interference fit with the root diameter

- 4 -

of the serrated portion 2, and having at one end a short lead portion 10 of larger internal diameter which is a light interference fit with the crest diameter of the serrated portion 2 (see Figure 1).

In assembly, the driving band 9 is axially aligned with the shell base, the lead portion 10 confronting the face 6, and is then pressed against the cutting edge 8 by means of suitable press tools. Continued application of pressure causes the cutting edge 8 to be broached through the driving band 9 until the lead portion 10 abuts the flange portion 3.

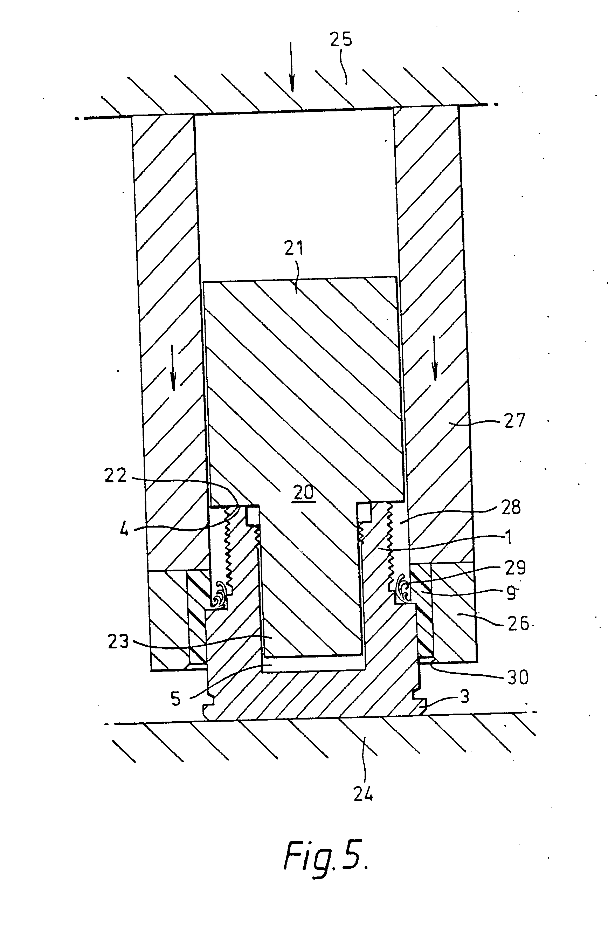

An example of press tools suitable for the assembly process is illustrated in Figure 5. A stepped mandrel 20 having an upper portion 21 of sliding fit within the driving band 9, a shoulder 22, and a lower portion 23 of sliding fit within the recess 5 of the shell base, is supported at the shoulder 22 upon the face 4 of the shell base, the lower portion 23 being axi-symmetrically located within the recess 5. The shell base is supported upon a fixed platen 24 of a hydraulic press (not shown) having a movable platen 25.

The driving band 9 is placed, lead portion 10 foremost, on the mandrel portion 21 and a support sleeve 26 of light interference fit with the external diameter of the driving band 9 and having a small internal chamfer 30 at one end, is lowered chamfer end first, onto the driving band. Both the sleeve and the band 9 are then pressed towards the shell base by a pressing-on sleeve 27, which sleeve is also a sliding fit upon the mandrel portion 21, the sleeve 27 being driven by the moveable platen 25 of the hydraulic press. A cavity 28 defined by the driving band 9, the pressing-on sleeve 27, the shoulder 22 and the shell base portion 1, provides egression space for nylon swarf 29 generated during the ensuing broaching.

After assembly the support sleeve 26 is pushed off the drive band 9 over the flange 3 by means of a pressing-off sleeve (not shown) having an internal diameter of sliding fit with the external diameter of the drive band 9.

It will be apparent to those skilled in the art that various press tool forms can be employed to adapt the invention to a wide variety of artefacts intended for rotation, for example, various types of shafts and gear wheels.

Claims:

1. A cylindrical body intended for assembly with a collar of material softer than that of the body, characterised in that the body includes a keyed portion (2) having a plurality of axially parallel keys (7) each of which is provided with a cutting edge (8) at one common axi-directional extremity thereof.

2. A cylindrical body as claimed in Claim 1 characterised in that the keys (7) are integral with the body and comprise splines of rectangular cross section.

3. A cylindrical body as claimed in Claim 2 characterised in that the splines are manufactured by a gear cutting process.

4. A cylindrical body as claimed in Claim 1 characterised in that the keys (7) are integral with the body and comprise serrations of triangular cross section.

5. A cylindrical body as claimed in Claim 4 characterised in that the serrations are manufactured by a knurling process.

6. A cylindrical body as claimed in either one of Claims 3 and 5 characterised in that the splines or serrations are each machined transversely at the said extremity so as to provide an end face (6) having a periphery comprising the cutting edge (8).

7. A cylindrical body as claimed in Claim 6 characterised in that the end faces (6) are mutually disposed in a single radial plane.

8. A cylindrical body as claimed in any one of the preceding Claims characterised in that the keyed portion (2) has a crest diameter greater than the internal diameter of the collar (9).

9. A cylindrical body as claimed in Claim 8 characterised in that the keyed portion (2) has a root diameter which is an interference fit with the internal diameter of the collar (9).

10.  A cylindrical body and a collar as claimed in any one of the preceding Claims characterised by comprising a shot or a shell and a driving band respectively.

11.  A process for assembling the cylindrical body claimed in any one of the preceding Claims with the collar, characterised by including the steps of:

   (a)   locating the collar in axial alignment with the body and in opposition to the cutting edges and

   (b)   pressing the collar against the cutting edges so as to broach axial keyways in the inner surface of the collar, pressure being continuously applied until the keys are fully axially engaged with the collar.

12.  Press tools for use in the process claimed in Claim 11 characterised by including:

   a mandrel (21) of sliding fit inside the collar and axisymmetrically engageable with the body,

   a support sleeve (26) of interference fit with the outer surface of the collar,

   a pressing-on sleeve (27) having an internal diameter equal to the internal diameter of the collar and an external diameter no less than the external diameter of the support sleeve, and

   a pressing-off sleeve of sliding fit with the outer surface of the collar for removing the support sleeve (26) when assembly has been completed.

Fig.1.

Fig.2.

Fig.3.

Fig.4.

Fig.5.